(19) Europäisches Patentamt
European Patent Office
Office européen des brevets

(11) **EP 0 710 927 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(51) Int Cl.7: **G06T 7/20**

(21) Anmeldenummer: **95116253.6**

(22) Anmeldetag: **16.10.1995**

(54) **Verfahren zur objektorientierten Erkennung bewegter Objekte**

Method for object-oriented recognition of moving objects

Méthode de reconnaissance orientée-objet d'objets mouvants

(84) Benannte Vertragsstaaten:
**CH DE ES FR GB IT LI SE**

(30) Priorität: **04.11.1994 DE 4440671**

(43) Veröffentlichungstag der Anmeldung:
**08.05.1996 Patentblatt 1996/19**

(73) Patentinhaber: **ROBERT BOSCH GMBH**
**70442 Stuttgart (DE)**

(72) Erfinder:
• **Mester, Rudolf, Dr. Ing.**
**D-31139 Hildesheim (DE)**
• **Hoetter, Michael, Dr. Ing.**
**D-30989 Gehrden (DE)**
• **Meyer, Michael**
**D-30419 Hannover (DE)**

(56) Entgegenhaltungen:
**DE-A- 4 311 972      US-A- 4 912 770**

• **PROCEEDINGS OF THE INTERNATIONAL SOCIETY FOR OPTICAL ENGINEERING ; APPLICATIONS OF DIGITAL IMAGE PROCESSING X, SAN DIEGO (US); SPIE , WASHINGTON (US), Seiten 479-488, XP000568114 G.A. JONES: "Motion detection in security applications using tracking and hierarchy"**
• **Rodger R.M. et al: 'Video motion detection systems: A review for the nineties', Proc. of the Int'l. Conf. on Security Technology, 1994, IEEE, pages 92-97**

**Beschreibung**

Stand der Technik

Die Erfindung geht aus von einem Verfahren zur Erkennung bewegter Objekte nach der Gattung des Hauptanspruchs (DE-A-43 11972). In der nicht vorveröffentlichten Patentanmeldung mit dem Aktenzeichen DE-A-43 32 753 ist bereits ein blockorientiertes Verfahren zur optischen Erkennung bewegter Objekte beschrieben. Bei diesem Verfahren wird von einer Bildaufnahmeeinheit ein Bild aufgenommen und anschließend das aufgenommene Bild mit einem Referenzbild in bezug auf die Meßgrößen Bildsignaländerung, Verschiebung und Textur verglichen. Dabei werden zur Ermittlung von Vergleichswerten vorzugsweise der zeitliche Mittelwert und die zeitliche Varianz als statistische Kenngrößen zur Beschreibung der typischen Verteilungen der Meßgrößen verwendet. Zeigt der Vergleich eine atypische Bildsignaländerung und eine atypische Textur und eine atypische Verschiebung so wird ein bewegtes Objekt erkannt, ein Signal abgegeben und das aktuelle Bildsignal als neues Referenzbild abgespeichert und für den nächsten Vergleich als Referenzbild verwendet. Wird keine atypische Meßgröße aber eine Verschiebung ungleich Null detektiert, so werden die zugehörenden Bildbereiche in einer Maske markiert und das Referenzbild wird in diesen Bildbereichen nicht nachgearbeitet. Dieses Verfahren arbeitet blockorientiert, d.h. es werden Detektorzellen rechteckiger Form gewählt und für jede dieser Detektorzellen die Meßgrößen erfaßt und ausgewertet.

In "Rodger RM et al., "Video motion detection systems: A review for the nineties", Proceedings of the International Conference on Security Technology, 1994, IEFE, pages 92-97" wird nach einer Bewegungsdetektion über mehrere Zellen ein Parameter für eine Objektgröße gewonnen als Entscheidungskriterium, ob ein Alarm ausgelöst werden soll. Kleine Objekte werden bei dieser Auswertung unterdrückt.

Vorteile der Erfindung

Das erfindungsgemäße Verfahren mit den Merkmalen des unabhängigen Anspruchs 1 hat demgegenüber den Vorteil, daß nicht nur einzelne Detektorzellen unabhängig voneinander, sondern ganze Objekte analysiert werden. Bei Bewegungen eines Teiles des Objektes wird nicht nur diese Teilbewegung, sondern die Bewegung des gesamten Objektes untersucht. Dadurch werden Fehlalarme auch unter extremen Umweltbedingungen z.B. Baum- und Strauchbewegungen bei Sturm weitgehendst unterdrückt.

Das Verfahren ist besonders effizient, da für eine erste Analyse des Bildinhaltes das blockorientierte Verfahren verwendet wird und anschließend, wenn das blockorientierte Verfahren ein bewegtes Objekt erkannt hat, eine objektorientierte Analyse des bewegten Objektes durchgeführt wird. Weiterhin ist es von Vorteil, daß die objektorientierte Analyse des Bildes bildpunktgenau durchgeführt wird, wodurch genauere Informationen über das Objekt zur Verfügung stehen und zur besseren Auswertung des Bildinhaltes führen.

Durch die in den Unteransprüchen aufgeführten Maßnahmen sind vorteilhafte Weiterbildungen und Verbesserungen des im unabhängigen Anspruch 1 angegebenen Verfahrens möglich. Besonders vorteilhaft ist es, vor einer genaueren objektorientierten Analyse die Objekte in bezug auf ihre Größe und ihre Form mit vorgegebenen Größen und vorgegebenen Formen zu vergleichen und einen weiteren Vergleich der Bildsignale der Objekte nicht durchzuführen, wenn die Größe der Objekte bzw. die Formen der Objekte nicht den vorgegebenen Größen bzw. den vorgegebenen Formen entsprechen. Auf diese Weise wird die Effizienz des Verfahrens verbessert.

Eine weitere vorteilhafte Ausbildung der Erfindung besteht darin, bei Objekten, deren Größe kleiner als eine vorgegebene Größe ist, die Bildsignale, die das bewegte Objekt darstellen, nur in bezug auf eine Bewegung mit dem Referenzbild zu vergleichen. Dies führt zu einer sicheren Aussage über die Bewegung des Objektes und es wird nur eine geringe Rechenkapazität benötigt.

Weiterhin ist es vorteilhaft, bei bewegten Objekten, deren Größe einen vorgegebenen Wert überschreitet, die Bildsignale, die das Objekt darstellen, nur in bezug auf Bildsignaländerung und/oder Texturänderung mit dem Referenzbild zu vergleichen. Dadurch wird das Verfahren beschleunigt, weil eine Bewegungsanalyse großer Objekte zeitaufwendig ist.

Eine effiziente Berechnung der Objektbewegung besteht darin, die Verschiebung des Objektes unter Verwendung der in einer Objektmaske enthaltenen Bildpunkte zu ermitteln.

Das erfindungsgemäße Verfahren wird gegen Fehlalarme zuverlässig geschützt, wenn die Bewegungsmessung sowohl ausgehend vom aktuellen Bild als auch ausgehend vom Referenzbild durchgeführt wird und die zwei ermittelten Bewegungsvektoren verglichen werden und die Bewegungsschätzung als unzuverlässig klassifiziert wird, wenn die Differenz der zwei Bewegungsvektoren über einer vorgegebenen Schwelle liegt.

Eine vorteilhafte Ausbildung des erfindungsgemäßen Verfahrens besteht darin, zur Ermittlung der objektbezogenen Bildsignaländerung und/oder Texturänderung die bei der blockorientierten Analyse ermittelten Bildsignaländerungen und Texturmerkmale zu summieren, wobei die Bildsignaländerungen und die Texturmerkmale proportional zum Flächenanteil der Detektorzelle gewichtet werden, mit dem das Objekt in einer Detektorzelle abgebildet ist.

Eine Verbesserung des erfindungsgemäßen Verfahrens wird erreicht, wenn für den Vergleich der Meßgrößen Bildsignaländerung und/oder Textur die statistische Verteilung dieser Meßgrößen, beschrieben durch Mittelwert und Varianz, verwendet werden.

Das erfindungsgemäße Verfahren wird genauer, indem der Mittelwert und die Varianz bei der objektbezogenen Analyse durch eine gewichtete Summe der Mittelwerte bzw. der Varianzen der blockorientierten Analyse ermittelt werden, wobei die Wichtung proportional zum Flächenanteil der Detektorzelle gewählt wird, mit dem die Detektorzelle das Objekt abdeckt.

Eine zusätzliche Vereinfachung des erfindungsgemäßen Verfahrens wird erreicht, indem die Ermittlung der Objekte durch eine bildpunktgenaue Änderungsdetektion erfolgt, wobei jeder mehrfach zusammenhängende, als geändert erkannte Bildbereich mit einer eigenen Bezeichnung gekennzeichnet wird.

Eine vorteilhafte Ausbildung des erfindungsgemäßen Verfahrens besteht darin, bei der bildpunktgenauen Änderungsdetektion des Objektes ein Hintergrundbild zu verwenden, in dem die Szene ohne das bewegte Objekt abgespeichert ist.

Besonders vorteilhaft ist es, die Größe der Objekte in bezug auf ihre Position im Bild zu bewerten und einen möglichen Objektalarm zu unterdrücken, falls die Objekte abhängig von ihrer Position im Bild eine vorgegebene Mindestgröße unterschreiten.

Eine besondere Ausbildung des Verfahrens wird dadurch erreicht, daß die objektorientierte Analyse nur dann durchgeführt wird, wenn die blockorientierte Analyse mögliche bewegte Objekte detektiert hat. Somit wird der Rechenaufwand für die objektorientierte Analyse gering gehalten.

Dadurch, daß die objektorientierte Analyse nicht für das gesamte Bild erfolgt, sondern nur in den Bildbereichen, in denen von der blockorientierten Analyse mögliche Objekte detektiert wurden, wird die Verarbeitungsgeschwindigkeit erhöht.

Zeichnung

Ein Ausführungsbeispiel der Erfindung ist in der Zeichnung dargestellt und in der nachfolgenden Beschreibung näher erläutert. Es zeigen

Figur 1 eine Vorrichtung zur Durchführung des Verfahrens,
Figur 2 einen ersten schematischen Programmablauf,
Figur 3 einen zweiten schematischen Programmablauf,
Figur 4 einen dritten schematischen Programmablauf,
Figur 5 Detektorzellen,
Figur 6 ein Referenz- und ein Hintergrundbild
Figur 7 einen Bildausschnitt und
Figur 8 eine Verteilung.

Beschreibung des Ausführungsbeispiels

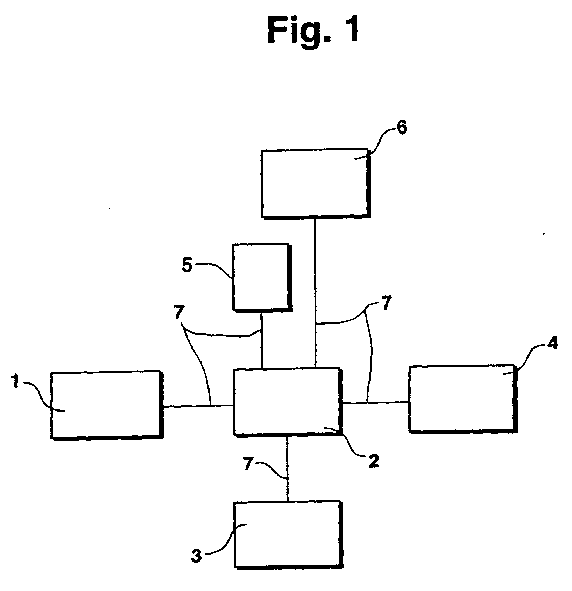

Figur 1 zeigt eine Bildaufnahmeeinheit 1, die über eine Datenleitung 7 mit einer Recheneinheit 2 verbunden ist. Die Recheneinheit 2 ist über eine weitere Datenleitung 7 mit einer Signalanzeige 5 verbunden. Zudem ist die Recheneinheit 2 über eine weitere Datenleitung 7 mit einem Speicher 4 verbunden. Weiterhin ist ein Bildschirm 6 mit der Recheneinheit 2 verbunden. Zusätzlich zeigt die Figur 1 eine Eingabeeinheit 3, die über eine weitere Datenleitung 7 mit der Recheneinheit 2 verbunden ist.

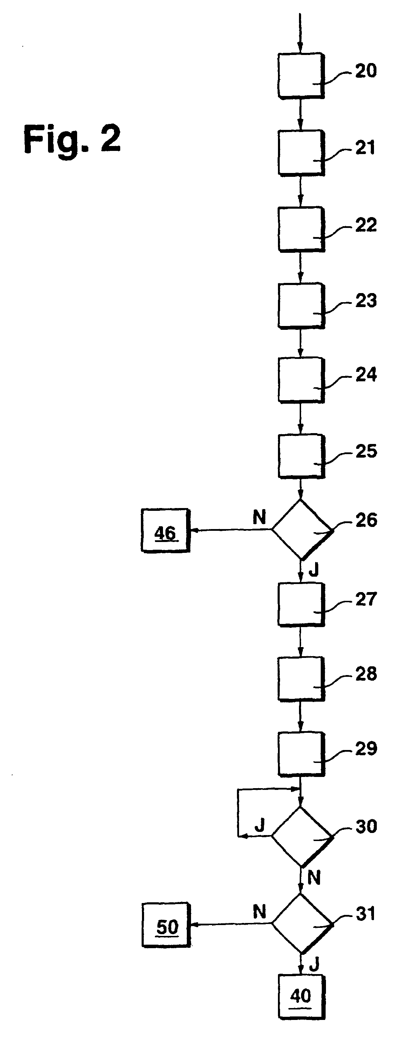

Figur 2 zeigt einen schematischen Programmablauf zur Durchführung des Verfahrens zur Erkennung von bewegten Objekten mittels objektorientierter Bildanalyse. Das entsprechende Programm ist im Speicher 4 abgelegt und wird von der Recheneinheit 2 abgearbeitet.

Bei Programmpunkt 20 wird von der Bildaufnahmeeinheit 1 ein Bild aufgenommen und an die Recheneinheit 2 weitergegeben. Die Recheneinheit 22 speichert das aktuelle Bild im Speicher 4 ab und führt eine Einteilung des aktuellen Bildes in Bildblöcke durch. Auf diese Weise wird das gesamte aktuelle Bild in gleich große rechteckige Bildblöcke aufgeteilt. Dabei werden z.B. Bildblöcke in einer Größe von 10 x 10 Bildpixeln verwendet.

Anschließend wird bei Programmpunkt 21 von der Recheneinheit 2 überprüft, ob im Speicher 4 bereits ein Referenzbild abgelegt ist. Ist dies nicht der Fall, so wird das aktuelle Bild als Referenzbild abgespeichert.

Anschließend wird für jeden Bildblock des aktuellen Bildes durch einen Vergleich mit dem entsprechenden Bildblock des Referenzbildes bei Programmpunkt 22 die Meßgröße Bildsignaländerung, bei Programmpunkt 23 die Meßgröße Textur und bei Programmpunkt 24 die Meßgröße Bewegung (Bewegungsvektor) berechnet. Die so ermittelten Meßgrößen werden dann bei Programmpunkt 25 mit ihrer zeitlichen Verteilungsfunktion - beschrieben durch Mittelwert und Varianz - verglichen.

Ergibt der Vergleich der aktuell ermittelten Meßgröße Bildsignaländerung mit ihrer Verteilung beschrieben durch Mittelwert und Varianz eine signifikante Abweichung oberhalb einer ersten Schwelle, so wird in einer ersten binären Maske der Bildblock beziehungsweise der Bildpunkt des Bildblockes mit einer 1 belegt. Liegt die Abweichung unter der ersten Schwelle, so wird in der ersten binären Maske der Bildblock mit einer Null belegt.

Entsprechend der Bildsignaländerung werden auch die Meßgrößen Bewegung und Textur des aktuellen Bildes mit ihren Verteilungen beschrieben durch Mittelwert und Varianz verglichen. Ergibt der Vergleich, daß die Abweichung der aktuell ermittelten Bewegung bzw. der Textur größer als ein vorgegebener zweiter bzw. vorgegebener dritter Wert sind, so wird in einer zweiten bzw. in einer dritten binären Maske der entsprechende Bildblock mit einer 1 gekennzeichnet. Ansonsten bleibt der Bildblock mit einer Null belegt.

Anschließend erfolgt bei Programmpunkt 26 die Abfrage, ob ein mögliches bewegtes Objekt erkannt worden ist. Ein mögliches bewegtes Objekt wird erkannt, wenn die Bewegung, die Bildsignaländerung und die Textur untypisch im Vergleich zu ihren Verteilungen beschrieben durch Mittelwert und Varianz sind. Ist dies nicht der Fall, so wird nach Programmpunkt 46 des Unterprogramms großes Objekt verzweigt. In den Programmpunkten 46, 47, 48 werden das Hintergrundbild, das Referenzbild und die Kenngrößen überarbeitet.

Ergibt jedoch die Abfrage, daß in einem Bildblock ein mögliches bewegtes Objekt erkannt wurde, so wird Programmpunkt 27 abgearbeitet. Bei Programmpunkt 27 wird eine objektorientierte Analyse des aktuellen Bildes durchgeführt. Vorzugsweise wird die objektorientierte Analyse nur für die Bildblöcke durchgeführt, in denen ein mögliches bewegtes Objekt erkannt wurde. Die entsprechenden Bildblöcke sind durch Einsen in der ersten, der zweiten und der dritten binären Maske gekennzeichnet. Die Bildsignale der Bildblöcke, für die ein bewegtes Objekt erkannt wurde, werden Bildpunkt für Bildpunkt mit dem Bildsignal eines Hintergrundbildes verglichen, so daß eine bildpunktgenaue Änderungsmaske ermittelt wird. Das Hintergrundbild enthält dabei die zu überwachende Szene ohne bewegte Objekte. Die Änderungsmaske stellt das bewegte Objekt dar. Zur Ermittlung der bildpunktgenauen Änderungsmaske wird ein Verfahren verwendet, das bereits in der nicht vorveröffentlichten Patentanmeldung DE-A-43 11 972 beschrieben ist.

Dabei wird jedes Bildpixel des Bildblocks mit dem entsprechenden Bildpixel des Referenzbildes im Hinblick auf das Bildsignal verglichen und die Differenz wird anschließend mit einer Schwelle verglichen. Der Bildpunkt wird in der Änderungsmaske gekennzeichnet, wenn die Differenz über der Schwelle liegt. Die Schwelle wird in Abhängigkeit von zeitlich und/oder räumlich angrenzenden Bildpunkten angepaßt.

Bei Programmpunkt 28 werden zusammenhängende Gebiete der Änderungsmaske mit einer Kennung gekennzeichnet und als ein Objekt erkannt.

Bei Programmpunkt 29 wird die Objektgröße und die Linienhaftigkeit der zusammenhängenden Gebiete ermittelt. Die Objektgröße ergibt sich direkt aus der Anzahl der Bildpunkte, die zu einem zusammenhängenden Gebiet gehören. Alle Objekte deren Größe eine vorgegebene Schwelle unterschreitet, (zum Beispiel Schneeflocken), werden unterdrückt und nicht weiter analysiert. Für alle übrigen Objekte wird deren Linienhaftigkeit berechnet. Zur Ermittlung der Linienhaftigkeit wird die maximale Ausdehnung e des Objektes ermittelt. Dazu werden die Bildpunkte eines zusammenhängenden Gebietes ermittelt, die einen maximalen Abstand voneinander aufweisen. Als Meßgröße der Linienhaftigkeit wird das Quadrat des maximalen Abstandes bezogen auf die Fläche des Objekts verwendet: Linienhaftigkeit = $e^2/A$, wobei mit e der maximale Abstand zweier Bildpunkte des Objektes und mit A die Anzahl der Bildpunkt des Objektes bezeichnet sind.

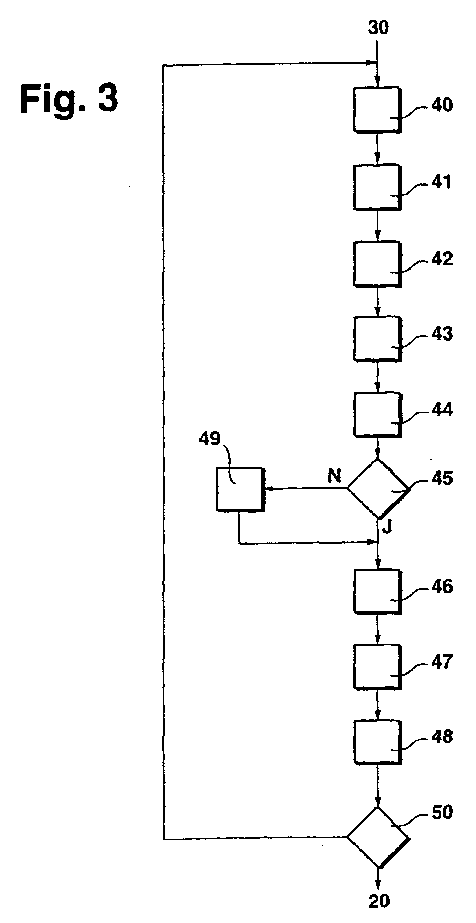

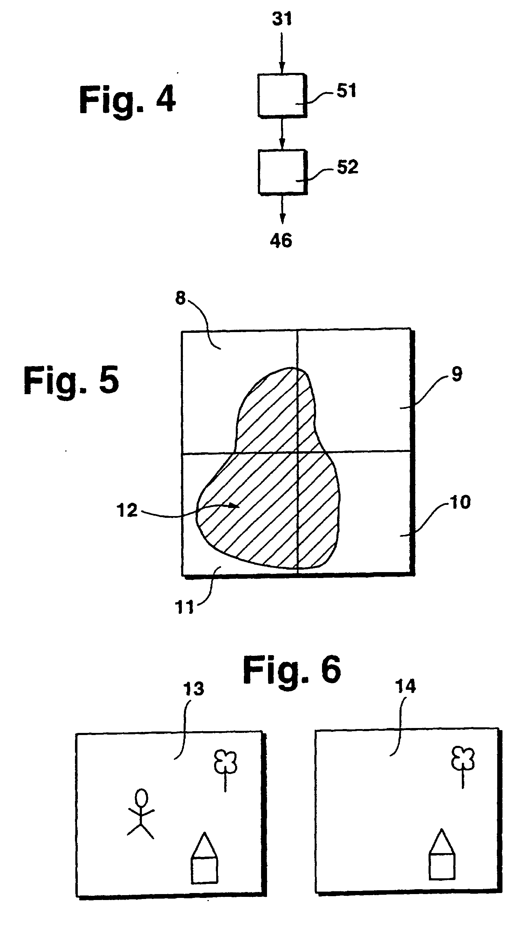

Anschließend erfolgt bei Programmpunkt 30 die Abfrage, ob das Objekt eine Linienhaftigkeit aufweist, die über einem vorgegebenen Wert liegt. Ist dies der Fall, wie zum Beispiel bei Ästen, so wird das Objekt nicht weiter untersucht und bei Programmpunkt 30 ein weiteres Objekt auf seine Linienhaftigkeit untersucht. Daraufhin erfolgt bei Programmpunkt 31 die Abfrage, ob die Größe des Objektes über einer vorgegebenen Größe liegt oder nicht. Ist das Objekt größer als die vorgegebene Größe, so wird zu einem Unterprogramm "großes Objekt", das in Figur 3 dargestellt ist, verzweigt. Andernfalls wird nach einem Unterprogramm "kleines Objekt" verzweigt, das in Figur 4 dargestellt ist.

In dem Unterprogramm großes Objekt folgt bei Programmpunkt 40 die Ermittlung einer objektbezogenen Bildsignaländerung. Dazu werden die blockorientierten Bildsignaländerungen der Bildblöcke aufsummiert, die teilweise oder ganz das Objekt bedecken. Diese Summation wird gewichtet durchgeführt, wobei das Gewicht der Summanden proportional zum Flächenanteil der von dem Objekt abgedeckten Detektorzelle gewählt wird.

Zur Erklärung der Wichtung der Summanden ist in Figur 5 ein erster, ein zweiter, ein dritter und ein vierter Bildblock 8, 9, 10, 11 dargestellt, in denen sich ein bewegtes Objekt 12 befindet. Dabei bedeckt das bewegte Objekt 12 den ersten Bildblock 8 über eine Fläche von 30% des ersten Bildblockes 8, die Fläche des zweiten Bildblockes 9 zu 10% der Fläche des zweiten Bildblockes 9, die Fläche des dritten Bildblockes 10 zu 15% der Fläche des Bildblockes 10 und die Fläche des vierten Bildblockes 11 zu 80% der Fläche des vierten Bildblockes 11. Somit werden bei der Summation der Bildsignaländerungen die Bildsignaländerung des ersten Bildblockes 8 mit dem Wert 30 multipliziert, die Bildsignaländerung des zweiten Bildblockes 9 mit dem Wert 10, die Bildsignaländerung des dritten Bildblockes 10 mit dem Wert 15 und die Bildsignaländerung des vierten Bildblockes 11 mit dem Wert 80 multipliziert und anschließend wird die Gesamtsumme durch den Wert 135 geteilt. Somit werden die Bildsignaländerungen der blockorientierten Analyse proportional zu deren Anteil am bewegten Objekt berücksichtigt.

Bei Programmpunkt 41 erfolgt die Auswertung der objektbezogenen Bildsignaländerungen. Die im Programmpunkt 40 ermittelte objektbezogene Bildsignaländerung wird mit der Verteilung der objektbezogenen Bildsignaländerung verglichen. Die Beschreibung der Verteilung der objektbezogenen Bildsignaländerung wird dabei durch ihren zeitlichen Mittelwert approximiert. Diese Kenngröße läßt sich aufgrund der großen Vielfalt möglicher Objekte nicht direkt berechnen, sondern nur geeignet approximieren. Als Approximation wird die gewichtete Summe der Mittelwerte der blockorientierten Bildsignaländerung der Detektorzelle verwendet, die teilweise oder ganz das aktuell bearbeitete Objekt bedecken. Der Wichtungsanteil wird wie bei der Ermittlung der objektorientierten Bildsignaländerung (vgl. Figur 5) proportional zum Flächenanteil des Bildblockes gewählt, der den Bildbereich des Objektes abdeckt.

Zur Auswertung, ob eine signifikante Bildsignaländerung vorliegt oder nicht, wird anschließend die Bildsignaländerung auf die Verteilung der Bildsignaländerung bezogen. Unterschreitet dieser Ausdruck eine vorgegebene Schwelle, so wird bei Programmpunkt 42 die durch das Objekt hervorgerufene Bildsignaländerung als nicht signifikant klassifiziert und ein möglicher Objektalarm unterdrückt und der zum Objekt gehörende Bildbereich in einer Objektstatusmaske als kein Objekt gekennzeichnet und das nächste Objekt verarbeitet.

Ist dies jedoch nicht der Fall, so werden bei Programmpunkt 43 die objektbezogenen Texturmerkmale ermittelt. Dazu werden die Texturmerkmale der Bildblöcke aufsummiert, die teilweise oder ganz von dem Objekt abgedeckt werden. Diese Summation wird gewichtet durchgeführt, wobei das Gewicht der Summanden (Textur eines Bildblockes) proportional zum Flächenanteil des Bildblockes gewählt wird, mit dem die Detektorzelle vom Objekt abgedeckt wird. Die Summation ist in Analogie zur Bildsignaländerung entsprechend Figur 5 durchzuführen.

Der so ermittelte Wert der objektbezogenen Textur wird anschließend bei Programmpunkt 44 ausgewertet. Dazu wird der Wert mit seiner Verteilung verglichen. Die Beschreibung der Verteilung der objektbezogenen Textur wird dabei durch ihren zeitlichen Mittelwert und ihre Varianz approximiert. Diese Kenngrößen lassen sich aufgrund der großen Vielfalt möglicher Objekte nicht direkt berechnen, sondern nur geeignet approximieren. Als Approximation wird die gewichtete Summe der Mittelwerte bzw. der Varianzen der blockorientierten Texturmerkmale der Bildblöcke verwendet, die teilweise oder ganz das Objekt bedecken. Der Wichtungsanteil wird dabei proportionale zum Flächenanteil der Detektorzelle gewählt, die das Objekt bedeckt (vgl. Figur 5).

Zur Auswertung, ob eine signifikante Texturänderung vorliegt oder nicht, wird anschließend der Ausdruck $(v-m)^2/s^2$ überprüft, wobei v die objektbezogene Textur, m den Mittelwert und s die Varianz der objektbezogenen Textur darstellen.

Bei Programmpunkt 45 erfolgt die Abfrage, ob der Ausdruck eine vorgegebene Schwelle unterschreitet. Ist dies der Fall, so wird bei Programmpunkt 49 die durch das Objekt hervorgerufene Texturänderung als nicht signifikant klassifiziert und ein möglicher Objektalarm unterdrückt. Der zum Objekt gehörende Bildbereich wird in der Objektstatusmaske bei Programmpunkt 45 mit der Kennung "kein Objekt" gekennzeichnet und zu Programmpunkt 46 verzweigt. Übersteigt der Ausdruck die vorgegebene Schwelle, so wird Objektalarm ausgelöst.

Anschließend erfolgt bei Programmpunkt 46 die Überarbeitung des Referenzbildes. Ist ein Objektalarm für das aktuelle Bild ausgegeben worden, so wird das gesamte Referenzbild durch das aktuelle Bild als neues Referenzbild überschrieben. Wurde kein Objektalarm ausgelöst, so werden in allen Bildblöcken, in denen die Objektstatusmaske mit "kein Objekt" gekennzeichnet ist, die Bildsignale des Referenzbildes durch Bildsignale des aktuellen Bildes ersetzt. Die Bildblöcke, die mit der Kennung "Objekt mit geringer Bewegung" gekennzeichnet sind, bleiben im Referenzbild unverändert.

Bildbereiche mit dem Objektstatus "Objekt mit geringer Bewegung" bleiben im Referenzbild unverändert, d. h. diese Bildbereiche werden im Referenzbild nicht nachgearbeitet. Bei Bildblöcken mit der Kennung "unsicheres Objekt" werden vor der Analyse des nächsten Bildpaares die Bildbereiche mit dem Objektstatus "Objekt mit geringer Bewegung" zwischengespeichert und zwei neue Bilder nacheinander eingelesen, wobei das zeitlich ältere dieser beiden Bilder als neues Referenzbild und das zeitlich neuere Bild als aktuelles Bild verwendet wird. In dieses Referenzbild werden anschließend die zwischengespeicherten Bildbereiche mit dem Objektstatus Objekt mit geringer Bewegung eingetragen. Durch dieses Vorgehen wird erreicht, daß Bildinformation, die nicht zuverlässig analysiert werden kann, nachgearbeitet wird, ohne daß Bildbereiche mit sich möglicherweise akkumulierenden Bewegungen überschrieben werden.

Durch das nacheinander einlesen der zwei neuen Bilder wird der Zeitabstand zwischen den Bildern verkleinert, so daß auch schnelle Bewegungen sicher analysiert werden können.

Bei Programmpunkt 47 erfolgt die Überarbeitung des Hintergrundbildes. Wurde ein Objektalarm ausgelöst, so bleibt das Hintergrundbild unverändert. Wurde kein Objektalarm ausgelöst, so wird das Hintergrundbild durch das aktuelle Bild ersetzt, falls für alle Objekte in der Objektstatusmaske die Kennung "kein Objekt" abgelegt ist. In allen anderen Fällen bleibt das Hintergrundbild unverändert.

Bei Programmpunkt 48 erfolgt die Überarbeitung der statistischen Kenngrößen der blockorientierten Merkmale. Wurde für das aktuelle Bild Objektalarm ausgelöst, so bleiben die Kenngrößen unverändert. Wurde kein Objektalarm ausgelöst, so wird in allen Bereichen, in denen die Objektstatusmaske die Kennzeichnung "kein Objekt" oder "unsicheres Objekt" aufweist, die Schätzung der statistischen Kenngrößen Mittelwert und Varianz der Meßgrößen Bildsignaländerung, der Textur und Bewegung mit einem IIR-(Infinite Impulse Respond)Tiefpaß erster Ordnung gemäß folgender Formel durchgeführt:

$$m_{vi}(x,y,t) = r\cdot\cdot v_i(x,y)+(1-t) \cdot m_{vi}(x,y,t-1)$$

bzw.

$$p_{vi}(x,y,t) = r\ v_i^{2(x,y)+(1-r)}\ p_{vi}(x,y,t-1)$$

und

$$\sigma_{vi}^{2}(x,y,t) = p_{vi}(x,y,t)-m_{vi}^{2}(x,y,t)$$

mit

| | |
|---|---|
| $m_{vi}(x,y,t)$, $m_{vi}(x,y,t-1)$ | zeitlicher Mittelwert der Meßgröße vi zum Zeitpunkt t bzw. t-1 |
| $p_{vi}(x,y,t)$, $p_{vi}(x,y,t-1)$ | zeitlicher Mittelwert der Leistung der Meßgröße vi zum Zeitpunkt t bzw. t-1 |
| $\sigma_{vi}^{2}(x,y,t)$ | zeitliche Varianz der Meßgröße vi zu Zeitpunkt t |
| $v_i(x,y)$ | Wert der meßgröße vi zum Zeit- punkt t an der Ortsposition (x,y) |
| r | Rekursionsfaktor des IIR-Tiefpaß |

Dieses Filter zeichnet sich dadurch aus, daß die Schätzung der jeweiligen Kenngröße pro Bildblock nur wenige Rechenschritte erfordert und mit jeweils nur einem zusätzlichen Speicher pro Meß- und Kenngröße durchgeführt werden kann.

In Abhängigkeit von dem eingestellten Rekursionsfaktor r verändert sich die mittlere Einschwingdauer des IIR-Tiefpasses (Anzahl der Schritte eines Einheitssprungs am Eingang des Filters, bis am Ausgang des Filters die 0,1-fache Amplitude des Eingangs vorliegt). Diese Einschwingdauer ist ein Maß dafür, wieviele Bilder mindestens verarbeitet werden müssen, bis die statistischen Kenngrößen ausreichend genau ermittelt sind. Prinzipiell gilt: je kleiner der Rekursionsfaktor, desto länger die Einschwingdauer. Über die Einschwingdauer und damit über den Rekursionsfaktor läßt sich beeinflussen, ob die ermittelten Kenngrößen die Langzeitstatistik der Meßgrößen erfassen (Rekursionsfaktor sehr klein) oder auch mittel- oder kurzfristige Änderungen der Meßgröße in der Statistik mit berücksichtigt werden sollen (Rekursionsfaktor möglichst groß). Außerdem paßt sich die Beschreibung der Verteilung der Meßgrößen durch die rekursive, zeitlich fortlaufende Schätzung der Kenngrößen an sich ändernde Szenensituationen an.

Die Kenngrößen für Bildblöcke, die nur Objekte mit geringer Bewegung aufweisen, werden nicht nachgearbeitet.

Anschließend erfolgt bei Programmpunkt 50 die Abfrage, ob alle Objekte abgearbeitet worden sind. Ist dies nicht der Fall, so wird nach Programmpunkt 40 zurückverzweigt und ein neues Objekt untersucht. Ansonsten wird nach Programmpunkt 20 zurückverzweigt.

Die Programmpunkte 46, 47 und 48 werden pro aktuelles Bild nur einmal durchgeführt.

In dem Unterprogramm kleines Objekt wird bei Programmpunkt 51 zur Ermittlung der Objektbewegung eine Verschiebungsschätzung durchgeführt, wobei bei der Auswertung des Matching-Kriteriums nur die Bildpunkte berücksichtigt werden, die zum Objekt gehören. Eine entsprechende Verschiebungslösung ist zum Beispiel von Hötter, "Objektorientierte Analyses-Synthese-Codierung basierend auf dem Modell bewegter, zweidimensionaler Objekte" Fortschr.-Ber. VDI Reihe 10, Nr. 217, Düsseldorf, VDI-Verlag 1992 beschrieben. Aufgrund der Kenntnis der bildpunktgenauen Objektmaske lassen sich damit Fehleinflüsse aus der Umgebung des Objektes unterdrücken. Zunächst wird ausgehend vom aktuellen Bild durch Objektmatching eine erste Objektverschiebung V1 in bezug auf das Referenzbild ermittelt. Anschließend wird als Kontrollmessung ausgehend vom Referenzbild eine zweite Objektverschiebung V2 in bezug auf das aktuelle Bild geschätzt.

Weichen die ersten und zweiten Objektverschiebungen V1 und V2 um mehr als einen vorgegebenen Wert voneinander ab, so wird eine mögliche Alarmierungn unterdrückt und der zum Objekt gehörende Bildbereich wird in der Objektstatusmaske als unsicheres Objekt gekennzeichnet. Ist der Unterschied zwischen der ersten und der zweiten Objektverschiebung kleiner als der vorgegebene Wert, so wird die Messung als zuverlässig eingestuft. Im Falle einer zuverlässigen Messung wird die ermittelte Objektverschiebung mit einem zweiten vorgegebenen Wert verglichen. Der zweite Wert beschreibt die Mindestbewegung, die erforderlich ist, um einen Objektalarm auszulösen. Unterschreitet die ermittelte Objektverschiebung diese Schwelle, so wird der Objektalarm unterdrückt und der zum Objekt gehörende Bildbereich wird in der Objektstatusmaske mit der Kennung "Objekt mit geringer Bewegung" gekennzeichnet. Überschreitet die ermittelte Objektverschiebung die Schwelle, so wird der Bildblock als "bewegtes Objekt" gekennzeichnet und es wird ein Objektalarm ausgelöst. Dies erfolgt bei Programmpunkt 52.

Anschließend werden die Programmpunkte 46, 47 und 48 zur Überarbeitung des Referenzbildes, des Hintergrundbildes und der statistischen Kenngrößen abgearbeitet.

Da die Messung der Verteilung der Meßgrößen aufwendig ist, werden zur Beschreibung der Verteilung der Mittelwert und die Varianz der Meßgrößen geschätzt. Diese Schätzung wird immer dann durchgeführt, wenn kein Objektalarm erkannt wurde, und damit die Bildeinheit einer typischen Szensituation entspricht. Auf diese Weise beschreiben der Mittelwert und die Varianz die Verteilung der Meßgrößen in typischen Szensituationen. Weicht ein aktueller Meßwert einer Meßgröße deutlich von dieser Beschreibung ab, so deutet dieses Ereignis auf eine atypische Szensituation, d.h. auf ein bewegtes Objekt, hin.

Die Entscheidung, ob eine Meßgröße deutlich (signifikant) von seiner statistischen Verteilung abweicht, wird anhand einer Schwellwertentscheidung getroffen. Dabei wird folgende Formel verwendet:

$$(v_i(x,y) - m_{vi}(x,y))^2/(c_{vi} \times s_{vi}(x,y))^2 > 1 \qquad (1)$$

mit

| | |
|---|---|
| $c_{vi}$ | Wichtungskonstante [$0<c_{vi}<50$ in Abhängigkeit von den untersuchten Meßgrößen] |
| $v_i(x,y)$ | aktueller Meßwert der Meßgröße vi an der Ortsposition (x,y) |
| $m_{vi}(x,y)$ | zeitlicher Mittelwert der Meßgröße vi an der Ortsposition (x,y) |
| $s_{vi}(x,y)$ | zeitliche Standardabweichung der Meßgröße vi an der Ortsposition (x,y) |

Die Wichtungskonstante $c_{vi}$ hängt dabei von der jeweils untersuchten Meßgröße ab. Sie ist ein Maß dafür, um wieviele Vielfache der Standardabweichung der aktuelle Meßwert von dem geschätzten Mittelwert der Meßgröße abweichen darf. Je größer diese Wichtungskonstante ist, desto stärker muß der aktuelle Meßwert von dem geschätzten Mittelwert abweichen, um Objektalarm auszulösen.

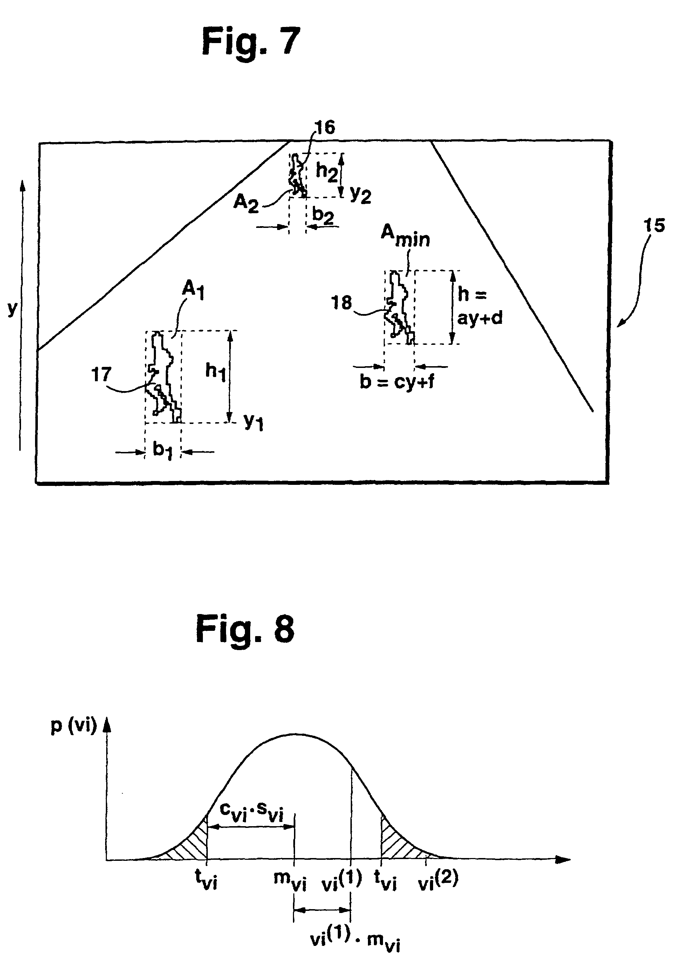

In Figur 8 ist die Ungleichung (1) graphisch dargestellt. Die Verteilungdichtefunktion P(vi) einer Meßgröße vi an einer Ortsposition (x,y) des Kamerabildes wird beschrieben durch die beiden Kenngrößen $m_{vi}$ (Mittelwert) und $s_{vi}$ (Standardabweichung). Liegt die aktuelle Meßgröße vi innerhalb des Intervalls [$-t_{vi}$, $+t_{vi}$] (z.B. $v_i^{(1)}$), so ist die Verteilungsdichte $p(v_i^{(1)})$ für den Meßwert $v_i^{(1)}$ größer als eine geforderte Schwelle $p_{min}$. Diese Schwelle $p_{min}$ ist die Verteilungsdichte des Meßwertes vi, für den folgende Bedingung gilt:

$$(v_i-m_{vi})^2=(c_i \times s_i)^2.$$

Liegt der aktuelle Meßwert vi außerhalb des Intervalls [$t_{vi}$, $+t_{vi}$] (z.B. $v_i^{(2)}$), so wird Objektalarm ausgelöst. Die Restfehlerwahrscheinlichkeit, d.h. die Wahrscheinlichkeit, daß irrtümlich auf eine "atypische" Szensituation geschlossen wird, obwohl der aktuelle Meßwert der Verteilung genügt, ist dann das Integral über alle möglichen Meßwerte außerhalb des Intervalls [$-t_{vi}$, $+t_{vi}$], die in Figur 8 schraffiert gezeichnet sind.

Um eine Schwellwertentscheidung durchführen zu können, werden die erforderlichen zeitlichen statistischen Kenngrößen Mittelwert und Varianz für alle Bildeinheiten und Meßgrößen separat geschätzt.

Diese Schätzung wird mit dem IIR-(Infinit Impulse Respond) Tiefpaß erster Ordnung gemäß der Formel von Programmpunkt 48 durchgeführt:

Figur 6 zeigte ein Referenzbild 13, in dem ein Baum, ein Haus und eine sich bewegende Person dargestellt sind. Zudem Zeigt Figur 6 ein Hintergrundbild 14, das den Baum und das Haus entsprechend dem Referenzbild 13 aufweist, aber keine sich bewegende Person zeigt. In einem Hintergrundbild 6 ist eine Szene ohne das sich bewegende Objekt abgespeichert. Im Referenzbild 13 ist die Szene mit dem sich bewegenden Objekt gespeichert.

Figur 7 zeigt schematisch einen Straßenabschnitt, auf dem sich in verschiedenen Abständen zur Kamera Personen bewegen. Da die Personen verschiedene Abstände zur Kamera haben, ist die Größe der Person bzw. des Objektes in Abhängigkeit zum Abstand unterschiedlich groß. Diese Information wird vorzugsweise bei der Detektion der Größe des Objektes berücksichtigt. Dazu wird bei einer Initialisierung der Objektdetektion durch einen Benutzer eine geforderte Mindestfläche der zu detektierenden Objekte im unteren Bereich A1 und im oberen Bildbereich A2 festgelegt. Das heißt im unteren Bildbereich muß ein bewegtes Objekt mindestens die Größe eines zweiten Objektes 17 und im oberen Bildbereich die Größe eines ersten Objektes 16 aufweisen, um zum Beispiel als bewegtes Objekt erkannt zu werden. Unter der Annahme, daß die zu überwachende Szene durch eine Ebene approximiert werden kann, nimmt die Höhe und die Breite des Objektes, das senkrecht zu dieser Ebene steht und sich in der Ebene bewegt in ausreichender Näherung linear mit wachsender Y-Position ab:

$$H(y) = ay + d, \text{ mit } a = (H1-H2)/(y1-y2),$$

$$d = H1-(H1-H2)/(y1-y2) \text{ und}$$

$$b(y) = cy + f \text{ mit } c = (B1-B2)/(y1-y2) \text{ und}$$

$$f = B1-(B1-B2)/(y1-y2),$$

wobei H1 die Höhe des zweiten Objektes 17 und y1 die Position in y-Richtung und B1 die Breite des zweiten Objektes 17 darstellen. H2 stellt die Höhe des ersten Objektes 16, B2 die Breite des ersten Objektes 16 und y2 die y-Position des ersten Objektes 16 dar. H(y) und B(y) stellen die Höhe und die Breite eines dritten Objektes 18 dar, das sich in einer y-Position zwischen dem ersten und den zweiten Objekt 16, 17 befindet.

Damit ergeben sich für die geforderte Mindestfläche amin für eine beliebige y-Positon folgende Werte:

$$a_{min}(y) = H(y) \cdot B(y) = a \cdot c \cdot y^2 + (a \cdot f + c \cdot d) \cdot y + d \cdot f.$$

Als Bezugskoordinate zur Ermittlung der Mindestgröße wird dabei der Fußpunkt des Objektes verwendet. Unterschreitet die ermittelte Objektgröße (Anzahl der Bildpunkte) die geforderte Mindestgröße, so wird eine Alarmierung unterdrückt.

**Patentansprüche**

1. Verfahren zur Erkennung bewegter Objekte in zeitlich aufeinander folgenden Bildern, wobei für eine blockorientierte Analyse ein aktuelles Bild in Bildblöcke eingeteilt wird, die jeweils eine Anzahl von Bildpunkten enthalten, und für jeden Bildblock ein Bildsignal des aktuellen Bildes mit einem Bildsignal eines entsprechenden Bildblockes eines Referenzbildes (21) verglichen wird, bei dem insbesondere eine Bildsignaländerung (22) und/oder eine Texturänderung (23) und/oder eine Bewegung ermittelt wird und die Differenz der Bildsignale mit einer vorgegebenen ersten Schwelle für eine signifikante Bildsignaländerung verglichen (25) wird,
**dadurch gekennzeichnet, daß** bei Überschreiten der ersten Schwelle mit einer objektorientierten Analyse (27), d.h. einer Erkennung eines Objekts als einen zusammenhängenden Bereich von Bildblöcken, die jeweils eine Mindeständerung aufweisen, die Form eines Objektes über seine Linienhaftigkeit ermittelt wird, wobei zur Berechnung der Linienhaftigkeit (29) der maximale Abstand zweier Bildpunkte des Objekts ermittelt wird und daß die Bildsignale, die das bewegte Objekte darstellen, mit den Bildsignalen des entsprechenden Bildbereiches des Referenzbildes verglichen werden, insbesondere durch Ermittlung einer Bildsignaländerung und/oder einer Texturänderung und/oder einer Bewegung, und Objekte von einer weiteren Untersuchung ausgeschlossen werden, wenn das Ergebnis des Vergleichs über einer vorgegebenen zweiten Schwelle für eine maximal erlaubte Linienhaftigkeit liegt (31).

2. Verfahren nach Anspruch 1, **dadurch gekennzeichnet, dass** neben der Form des Objekts auch dessen Größe ermittelt wird.

3. Verfahren nach Anspruch 1 oder 2, **dadurch gekennzeichnet, daß** bei Objekten, deren Größe unter einer vorgegebenen dritten Schwelle liegt und bei Objekten, deren Formen vorgegebene Anforderungen nicht erfüllen, ein Vergleich der Bildsignale der Objekte unterbleibt und die Objekt nicht als bewegte Objekte (42) erkannt werden.

4. Verfahren nach einem der Ansprüche 1 bis 3, **dadurch gekennzeichnet, daß** bei Objekten, die kleiner als eine vorgegebene Größe sind, die Bildsignale, die das bewegte Objekt darstellen, nur in bezug auf eine Bewegung mit dem Referenzbild verglichen werden.

5. Verfahren nach einem der Ansprüche 1 bis 4, **dadurch gekennzeichnet, daß** die Objektbewegung durch eine Verschiebung. der in einer Objektmaske enthaltenen Bildpunkten ermittelt wird.

6. Verfahren nach einem der Ansprüche 1 bis 5, **dadurch gekennzeichnet, daß** eine erste Verschiebung des Objektes ausgehend vom aktuellen Bild im Vergleich zum Referenzbild ermittelt wird, daß eine zweite Verschiebung des Objektes ausgehend vom Referenzbild im Vergleich zum aktuellen Bild ermittelt wird, daß die Verschiebung des Objektes als unzuverlässig verworfen und klassifiziert wird, wenn die Differenz zwischen der ersten und der zweiten Verschiebung über einem vorgegebenen, Wert liegt.

7. Verfahren nach einem der Ansprüche 1 bis 4, **dadurch gekennzeichnet, daß** zur Ermittlung der objektbezogenen Bildsignaländerung und objektbezogenen Textur die bei der blockorientierten Analyse ermittelten Bildsignaländerungen und Texturen der Bildblöcke, die mindestens teilweise das Objekt aufweisen, summiert werden, wobei das Gewicht der Summanden proportional zu der Fläche des Bildblockes gewählt wird, mit der der Bildblock das Objekt abdeckt.

8. Verfahren nach einem der Ansprüche 1 bis 7, **dadurch gekennzeichnet, daß** für einen Vergleich der objektbezogenen Bildsignaländerung und der objektbezogenen Textur die statistische Verteilung der Bildsignaländerung und der Textur, insbesondere der Mittelwert und die Varianz, für einen Vergleich mit einer vorgegebenen vierten Schwelle verwendet werden.

9. Verfahren nach Anspruch 8, **dadurch gekennzeichnet, daß** der objektbezogene Mittelwert und die objektbezogene Varianz durch eine gewichtete Summe der Mittelwerte bzw. eine gewichtete Summe der Varianzen der blockorientierten Bildsignaländerung und der blockorientierten Textur ermittelt werden, wobei die Wichtung proportional zum Flächenanteil des Bildblockes gewählt wird, mit dem der Bildblock das Objekt abdeckt.

10. Verfahren nach einem der Ansprüche 1 bis 9, **dadurch gekennzeichnet, daß** die Ermittlung der Objektmaske durch eine bildpunktgenaue Änderungsdetektion erfolgt und jeder zusammenhängende, als geändert erkannte Bildbereich mit einer Kennung gekennzeichnet wird.

11. Verfahren nach Anspruch 10, **dadurch gekennzeichnet, daß** bei der bildpunktgenauen Änderungsdetektion ein Hintergrundbild verwendet wird, in das die Szene ohne bewegte Objekte abgespeichert ist.

12. Verfahren nach einem der Ansprüche 1 bis 11, **dadurch gekennzeichnet, daß** als Schwellwertvergleich für die objektbezogene Bildsignaländerung die Formel $v/m > t$ und für die objektbezogene Textur die Formel $(v-m)^2/s^2 > t$ verwendet wird, wobei mit t eine Schwelle, mit v die objektbezogene Bildsignaländerung bzw. die objektbezogene Textur, mit m der zeitliche Mittelwert der objektbezogenen Bildsignaländerung bzw. die objektbezogenen Textur und mit s die zeitliche Standardabweichung der objektbezogenen Textur bezeichnet ist.

13. Verfahren nach einem der Ansprüche 1 bis 12, **dadurch gekennzeichnet, daß** die Größe des bewegten Objektes in Abhängigkeit von der Bildposition gewichtet ermittelt wird.

14. Verfahren nach einem der Ansprüche 1 bis 13, **dadurch gekennzeichnet, daß** das Referenzbild nach dem Auslösen eines Objektalarms mit dem aktuellen Bild überschrieben wird, daß bei nicht Auslösen eines Objektalarms die Bildblöcke des Referenzbildes, die kein bewegtes Objekt aufweisen, durch die entsprechenden Bildblöcke des aktuellen Bildes ersetzt werden, und daß die Bildblöcke mit einem Objekt, das eine kleine Bewegung durchführt, unverändert bleiben.

15. Verfahren nach Anspruch 13, **dadurch gekennzeichnet, daß** das Hintergrundbild nach Auslösen eines Objektalarms unverändert beibehalten wird und daß bei Nichtauslösen eines Objektalarms die Bildblöcke des Hintergrundbildes, die kein bewegtes Objekt aufweisen, durch die entsprechenden Bildblöcke des aktuellen Bildes ersetzt werden.

**EP 0 710 927 B1**

**Claims**

1. Method for identifying moving objects in chronologically successive images, in which case, for a block-oriented analysis, a current image is divided into image blocks each containing a number of pixels, and for each image block an image signal of the current image is compared with an image signal of a corresponding image block of a reference image (21), in which, in particular, an image signal change (23) and/or a texture change (23) and/or a motion is determined and the difference between the image signals is compared (25) with a predetermined first threshold for a significant image signal change,
**characterized in that**, in the case where the first threshold is exceeded, with an object-oriented analysis (27) i.e. an identification of an object as a contiguous region of image blocks each having a minimum change, the form of an object is determined by way of its linear nature, the maximum distance between two pixels of the object being determined in order to calculate the linear nature (29) and **in that** the image signals which represent the moving objects are compared with the image signals of the corresponding image region of the reference image, in particular by determination of an image signal change and/or a texture change and/or a motion, and objects are precluded from a further examination if the result of the comparison lies above a predetermined second threshold for a maximum permitted linear nature (31).

2. Method according to Claim 1, **characterized in that**, besides the form of the object, the size of the latter is also determined.

3. Method according to Claim 1 or 2, **characterized in that**, in the case of objects whose size is below a predetermined third threshold and in the case of objects whose forms do not fulfil predetermined requirements, a comparison of the image signals of the objects does not happen and the objects are not identified as moving objects (42).

4. Method according to one of Claims 1 to 3, **characterized in that**, in the case of objects which are smaller than a predetermined size, the image signals which represent the moving objects are compared with the reference image only with regard to a motion.

5. Method according to one of Claims 1 to 4, **characterized in that** the object motion is determined by a displacement of the pixels contained in an object mask.

6. Method according to one of Claims 1 to 5, **characterized in that** a first displacement of the object is determined proceeding from the current image in comparison with the reference image, **in that** a second displacement of the object is determined proceeding from the reference image in comparison with the current image, **in that** the displacement of the object is rejected and classified as unreliable if the difference between the first and second displacements lies above a predetermined value.

7. Method according to one of Claims 1 to 4, **characterized in that**, in order to determine the object-related image signal change and object-related texture the image signal changes and textures - determined during the block-oriented analysis - of the image blocks which at least partially have the object are summed, the weight of the addends being chosen to be proportional to the area of the image block with which the image block covers the object.

8. Method according to one of Claims 1 to 7, **characterized in that**, for a comparison of the object-related image signal change and the object-related texture, the statistical distribution of the image signal change and of the texture, in particular the average value and the variance, are used for a comparison with a predetermined fourth threshold.

9. Method according to Claim 8, **characterized in that** the object-related average value and the object-related variance are determined by means of a weighted sum of the average values and, respectively, a weighted sum of the variances of the block-oriented image signal change and of the block-oriented texture, the weighting being chosen to be proportional to the area proportion of the image block with which the image block covers the object.

10. Method according to one of Claims 1 to 9, **characterized in that** the object mask is determined by a pixel-accurate change detection and each contiguous image region identified as having changed is marked by an identifier.

11. Method according to Claim 10, **characterized in that** a background image in which the scene without moving objects is stored is used during the pixel-accurate change detection.

**12.** Method according to one of Claims 1 to 11, **characterized in that**, as threshold value comparison, the formula $v/m > t$ is used for the object-related image signal change and the formula $(v-m)^2/s^2 > t$ is used for the object-related texture, where t designates a threshold, v designates the object-related image signal change and, respectively, the object-related texture, m designates the temporal average value of the object-related image signal change and, respectively, the object-related texture, and s designates the temporal standard deviation of the object-related texture.

**13.** Method according to one of Claims 1 to 12, **characterized in that** the size of the moving object is determined in a weighted manner as a function of the image position.

**14.** Method according to one of Claims 1 to 13, **characterized in that** the reference image is overwritten with the current image after the triggering of an object alarm, **in that**, in the case where an object alarm is not triggered, the image blocks of the reference image which have no moving object are replaced by the corresponding image blocks of the current image, and **in that** the image blocks with an object which carries out a small movement remain unchanged.

**15.** Method according to Claim 13, **characterized in that** the background image is maintained unchanged after the triggering of an object alarm, and **in that**, in the case where an object alarm is not triggered, the image blocks of the background image which have no moving object are replaced by the corresponding image blocks of the current image.

**Revendications**

**1.** Procédé de reconnaissance d'objets mouvants dans des images qui se suivent chronologiquement, une image actuelle étant divisée en blocs d'images pour une analyse orientée bloc, blocs qui contiennent respectivement une multitude de pixels, et un signal de l'image actuelle étant, pour chaque bloc d'images, comparé à un signal d'image d'un bloc d'images correspondant d'une image de référence (21), selon lequel on détermine notamment une modification du signal d'image (22) et/ou une modification de texture (23) et/ou un mouvement, et la différence entre les signaux d'image est comparée (25) à un premier seuil prédéfini pour une modification de signal d'image significative,
**caractérisé en ce qu'**

- en cas de dépassement du premier seuil avec une analyse orientée objet (27), c.à.d. une reconnaissance d'un objet comme une zone cohérente de blocs d'images qui présentent une modification minimale, la forme d'un objet est déterminée à l'aide de la netteté de ses lignes, la distance maximale entre deux pixels de l'objet étant déterminée pour calculer la netteté des lignes (29), et
- les signaux d'image représentant l'objet mouvant sont comparés aux signaux d'image de la zone d'image correspondante de l'image de référence, notamment en déterminant une modification de signal d'image et/ou une modification de texture et/ou un mouvement, et des objets sont exclus d'une analyse supplémentaire si le résultat de la comparaison se situe (31) au-dessus d'un deuxième seuil prédéfini pour une netteté des lignes maximale autorisée.

**2.** Procédé selon la revendication 1,
**caractérisé en ce que**
parallèlement à la forme de l'objet, sa taille est également déterminée.

**3.** Procédé selon l'une des revendications 1 ou 2,
**caractérisé en ce que**
dans le cas d'objets dont la taille est inférieure à un troisième seuil prédéfini, et dans le cas d'objets dont les formes ne répondent pas aux exigences prédéfinies, il n'y a pas de comparaison des signaux d'image des objets et les objets ne sont pas reconnus comme objets mouvants (42).

**4.** Procédé selon l'une quelconque des revendications 1 à 3,
**caractérisé en ce que**
dans le cas d'objets inférieurs à une taille prédéfinie, les signaux d'image représentant l'objet mouvant ne sont comparés à l'image de référence que par rapport à un mouvement.

**5.** Procédé selon l'une quelconque des revendications 1 à 4,
**caractérisé en ce que**
le mouvement d'objet est déterminé par un déplacement de pixels contenus dans un masque d'objet

**6.** Procédé selon l'une quelconque des revendications 1 à 5,
**caractérisé en ce qu'**
un premier déplacement de l'objet est déterminé à partir de l'image actuelle par rapport à l'image de référence, un deuxième déplacement de l'objet est déterminé à partir de l'image de référence par rapport à l'image actuelle, et le déplacement de l'objet est rejeté et classé comme non fiable lorsque la différence entre le premier et le deuxième déplacement est supérieure à une valeur prédéfinie.

**7.** Procédé selon l'une quelconque des revendications 1 à 4,
**caractérisé en ce que**
pour déterminer la modification de signal d'image relative à l'objet et de la texture relative à l'objet, on additionne les modifications de signal d'image déterminées lors de l'analyse orientée bloc et les textures des blocs d'images qui présentent l'objet au moins partiellement, le poids des opérandes étant sélectionné proportionnellement à la surface du bloc d'images avec laquelle le bloc d'images recouvre l'objet.

**8.** Procédé selon l'une quelconque des revendications 1 à 7,
**caractérisé en ce que**
l'on utilise, pour une comparaison de la modification de signal d'image relative à l'objet et de la texture relative à l'objet, la répartition statistique de la modification de signal d'image et de la texture, notamment la valeur moyenne et la variance, pour une comparaison avec un quatrième seuil prédéfini.

**9.** Procédé selon la revendication 8,
**caractérisé en ce que**
la valeur moyenne relative à l'objet et la variance relative à l'objet sont déterminées par une somme pondérée des valeurs moyennes, ou une somme pondérée des variances de la modification de signal d'image et de la texture orientées bloc, la pondération étant sélectionnée proportionnellement à la fraction de surface du bloc d'images avec laquelle le bloc d'images recouvre l'image.

**10.** Procédé selon l'une quelconque des revendications 1 à 9,
**caractérisé en ce que**
le masque objet est déterminé en détectant une modification au pixel près, et chaque zone d'image cohérente, reconnue comme modifiée, est **caractérisée par** un signe distinctif.

**11.** Procédé selon la revendication 10,
**caractérisé en ce que**
lors de la détection de modification au pixel près, on utilise un fond d'image dans lequel est mémorisée la scène sans objet mouvant.

**12.** Procédé selon l'une quelconque des revendications 1 à 11,
**caractérisé en ce que**
comme comparaison de valeur seuil pour la modification de signal d'image relative à l'objet, on utilise la formule $v/m > t$, et pour la texture relative à l'objet la formule $(v-m)^2/s^2 > t$, t représentant un seuil, v la modification de signal d'image relative à l'objet, resp. la texture relative à l'objet, m la valeur moyenne chronologique de la modification de signal d'image relative à l'objet ou la texture relative à l'objet, et s l'écart type chronologique de la texture relative à l'objet.

**13.** Procédé selon l'une quelconque des revendications 1 à 12,
**caractérisé en ce que**
la taille de l'objet mouvant est déterminée de manière pondérée en fonction de la position de l'image.

**14.** Procédé selon l'une quelconque des revendications 1 à 13,
**caractérisé en ce que**
l'image de référence est écrasée par l'image actuelle après le déclenchement d'une alarme objet, **en ce que**, si aucune alarme objet ne se déclenche, les blocs de l'image de référence qui ne présentent pas d'objet mouvant sont remplacés par les blocs d'images correspondants de l'image actuelle, et les blocs d'images avec un objet qui exécute un petit mouvement restent inchangés.

15. Procédé selon la revendication 13,
**caractérisé en ce que**
le fond d'image reste inchangé après le déclenchement d'une alarme objet et **en ce que**, si aucune alarme objet ne se déclenche, les blocs d'images du fond d'image qui ne présentent aucun objet mouvant sont remplacés par les blocs d'images correspondants de l'image actuelle.

# Fig. 1

# Fig. 2

**Fig. 3**

**Fig. 4**

31

51

52

46

**Fig. 5**

8

9

12

10

11

**Fig. 6**

13

14

# Fig. 7

# Fig. 8